Europäisches Patentamt

European Patent Office

Office européen des brevets

(19)

(11) **EP 1 056 985 B1**

(12) **FASCICULE DE BREVET EUROPEEN**

(45) Date de publication et mention
de la délivrance du brevet:
**01.09.2004 Bulletin 2004/36**

(51) Int Cl.⁷: **G01B 7/16**, G01B 5/30,
G01L 25/00

(21) Numéro de dépôt: **99904667.5**

(22) Date de dépôt: **16.02.1999**

(86) Numéro de dépôt international:
**PCT/CA1999/000136**

(87) Numéro de publication internationale:
**WO 1999/041565 (19.08.1999 Gazette 1999/33)**

(54) **CAPTEUR D'EXTENSIOMETRIE DESTINE A MESURER DES DEFORMATIONS A CALAGE MECANIQUE DE PREMIERE POSE ET CALIBRAGE AUTOMATIQUE EN FONCTION DE CE CALAGE**

DEHNUNGSAUFNEHMER MIT MECHANISCHER VERRIEGELUNG WÄHREND DES EINBAUS UND SELBSTÄTIGER KALIBRIERUNG MIT HILFE DIESER VERRIEGELUNG

TENSILE TESTING SENSOR FOR MEASURING MECHANICAL JAMMING DEFORMATIONS ON FIRST INSTALLATION AND AUTOMATIC CALIBRATING BASED ON SAID JAMMING

(84) Etats contractants désignés:
**AT BE CH CY DE DK ES FI FR GB GR IE IT LI LU MC NL PT SE**

(30) Priorité: **16.02.1998 CA 2230001**

(43) Date de publication de la demande:
**06.12.2000 Bulletin 2000/49**

(73) Titulaire: **NEWTECH MECATRONIC INC**
**Blainville, Québec J7C 3V3 (CA)**

(72) Inventeurs:
• **MAUBANT, Philippe**
**F-68340 Riquewihr (FR)**

• **RANCOURT, Yvon**
**Blainville, Québec J7C 3V3 (CA)**

(74) Mandataire: **Nithardt, Roland**
**CABINET NITHARDT ET ASSOCIES**
**14 Boulevard Alfred Wallach**
**BP 1445**
**68071 Mulhouse Cédex (FR)**

(56) Documents cités:
**WO-A-98/29671       US-A- 2 666 262**
**US-A- 3 411 348       US-A- 3 780 817**
**US-A- 5 355 715       US-A- 5 522 270**

**Description**

**CHAMP DE L'INVENTION**

Les capteurs sont des éléments qui permettent de mesurer les phénomènes physiques que l'on a l'habitude de designer sous le nom de grandeurs ou paramètres. Ils traduisent l'état ou l'évolution de ces grandeurs ou paramètres sous la forme de signaux électriques. Ils permettent donc de connaître le déroulement et par la suite les comportements statiques et dynamiques des processus dans lesquels ils sont mis en oeuvre.

**DESCRIPTION DE L'ART ANTÉRIEUR**

Les capteurs sont aujourd'hui largement répandus et ils sont utilisés pratiquement dans tous les secteurs d'activités. Ils mesurent des températures, des pressions, des positions et des niveaux, pour ne citer que les principaux. Les ouvrages et les catalogues des spécialistes indiquent les caractéristiques de leur fonctionnement et de leurs utilisations. Grâce à ces catalogues, il est possible de savoir pour quels états de la grandeur physique le capteur délivre en correspondance des valeurs de signaux électriques. On emploie alors l'expression d'échelle de conversion, ce qui signifie qu'il existe une relation cohérente entre la grandeur physique et le signal électrique. Par exemple, si l'on considère un capteur de pression, pour une valeur de pression introduite dans le capteur, on obtient une valeur du signal électrique sous la forme d'une tension ou d'un courant

En fonction des domaines de la physique et de la disponibilité des technologies électriques et électroniques, il est plus ou moins facile de concevoir et de fabriquer un capteur. Le niveau de simplicité de la fabrication et de l'emploi d'un capteur détermine son coût, les secteurs d'utilisation et, par voie de conséquence, son marché.

Certains capteurs ne sont pas aisés à réaliser pour des raisons qui sont liées à la nature et à la manière dont le paramètre physique est accessible. Pour des capteurs destinés à mesurer des forces, s'il est en effet dans le principe facile de mesurer une force qui se développe dans une pièce de métal, la saisie de cette force en forme économique n'est pas simple.

La mesure des forces qui sont appliquées sur une pièce de métal prend en général comme base la déformation du matériau soumis à l'action des forces mécaniques de traction, de compression, de torsion et/ou la combinaison conjuguée de l'action de ces forces.

L'importance des déformations en fonction des forces agissantes détermine le gradient, c'est à dire la précision avec laquelle on peut apprécier la déformation élémentaire. 11 est donc fondamental de connaître les lois des correspondances des déformations en micron ou en millimètre en fonction des forces appliquées sur la pièce.

Le gradient se détermine par une étude mathématique de la résistance des matériaux utilisés à laquelle il faut associer, selon le dessin de la pièce, une simulation aux éléments finis de façon à établir la loi des correspondances des déformations en fonction des forces.

La difficulté est perceptible immédiatement car il n'est pas facile de connaître l'ensemble des gradients compte tenu de la diversité des matériaux et de la forme des pièces. Chaque pièce est un cas particulier et pour employer un capteur destiné à mesurer des forces ou des déformations un certain nombre de règles doivent être respectées. Il faut connaître de façon précise les emplacements exacts où se développent les forces et quelles sont les déformations maximum et minimum qui sont produites par la résultante de ces forces.

Une fois ces éléments connus, un certain nombre de composants et de techniques permettent d'obtenir un signal électrique qui est représentatif des déformations qui se développent dans la pièce. Ce sont des composants du type jauges de contraintes, des éléments piezo résistifs, capacitifs, des dispositifs optiques qui permettent de mesurer le changement d'orientation granulométrique des matériaux ou des composants ferro magnétiques dont le déplacement dans un champ magnétique détermine un signal électrique en relation avec la déformation de la pièce.

Même si aujourd'hui ces composants sont connus et mis en oeuvre, leur implantation sur un organe mécanique n'est pas facile et la répétitivité de la valeur de l'information n'est pas très fidèle lorsque l'on met en place ou que l'on remplace un capteur par un autre. Il est nécessaire dans la plupart des cas de recalibrer le capteur et donc de régler les valeurs des signaux électriques qui sont le zéro et l'échelle.

Les capteurs destinés à mesurer des forces sont mis en oeuvre principalement selon deux méthodes.

La première consiste à coller un pont constitué de jauges de contrainte à l'endroit où la déformation se produit. Dans ce cas, la valeur du signal est hautement liée à la précision avec laquelle le pont de jauges est mis en position et orienté sur la pièce, ainsi qu'à l'uniformité de la valeur de la pression avec laquelle le pont de jauges est mis en relation avec la pièce. Par nature, le pont de jauges n'offre pas la possibilité d'utiliser un positionnement mécanique de précision par rapport au lieu où se développent les forces dans la pièce. Or, comme le signal d'un pont de jauges résistif est, par exemple, déterminé par l'équation $R = p\, L/S$ où R est la valeur de la résistance qui évolue en fonction de l'allongement et de la section du conducteur qui constitue le pont de jauges, p est la résistivité des matériaux constituant la résistance, L est la longueur du conducteur et S la section. Les valeurs de L et de S peuvent être affectées en fonction de la méthode de mise en place du pont de jauges. Ceci est vrai pour les ponts, quelles que soient les technologies piezo résistives, capacitives et autres, lorsque les jauges sont mises en place directement sur des pièces dont l'état mécanique est brut et leurs dimensions moyennes ou importantes.

La deuxième consiste à coller un pont de jauges sur une lame de métal dont les caractéristiques sont connues tel que décrit dans la demande de brevet CA 2,198,537, déposé le 26 février 1997, et d'assurer ainsi une répétitivité de la relation de la déformation mécanique de la lame par rapport à la variation de la résistance de l'élément du pont si l'on utilise un pont résistif par exemple et à monter ensuite la lame sur un organe mécanique dans lequel se développent les forces. Le problème dans ce cas est que les matériaux de la lame ne sont pas forcément de même nature que les matériaux qui constituent les organes mécaniques et que l'adaptation du montage de la lame avec les organes mécaniques représente une difficulté pour mettre en place le capteur dans l'environnement mécanique tout en conservant la fidélité de la correspondance entre la grandeur physique et le signal électrique calibré lors de la fabrication. Il est donc nécessaire de prendre en compte le montage du capteur pour optimiser l'échelle de la conversion mécanique des forces en signal électrique.

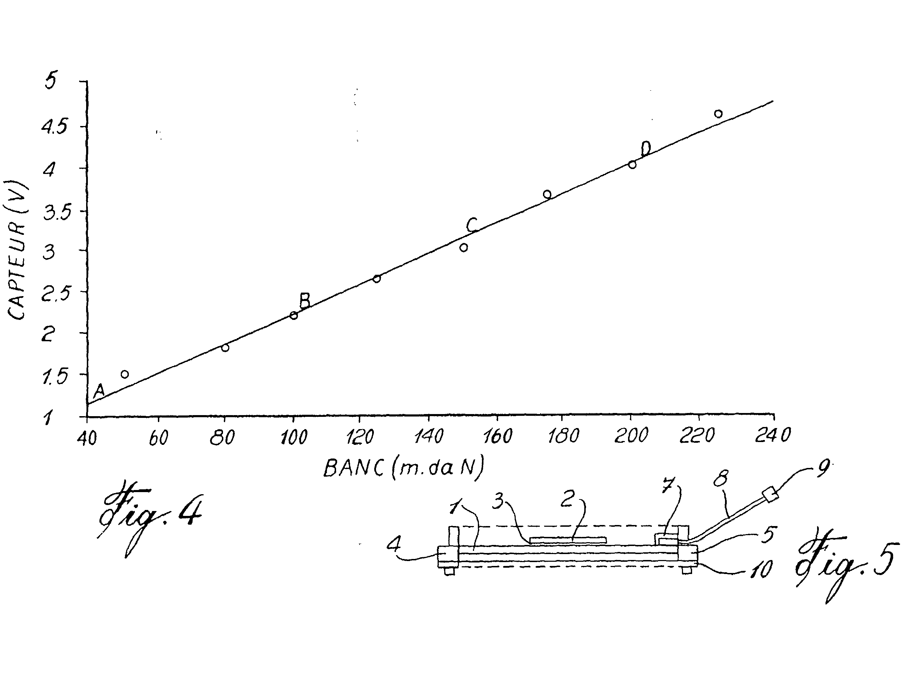

Le brevet américain numéro 5,522,270 de Gissinger et al. décrit un appareil pour mesurer le stress exercé sur un organe mécanique et une méthode pour attacher cet appareil. Une jauge génère un courant électrique selon le stress exercé sur la pièce. La jauge est pré-pliée en usine tel qu'illustré à la figure 5 avec quatre points de tension situés aux plis. Le problème que les gens versés dans l'art ont identifié avec cet appareil est que les points de tension rendent le flambage beaucoup moins précis. De plus, la répétivité du flambage est difficile car chaque lame réagit différemment à cause des points de tension. En étirant la jauge de Gissinger et al. par les points A et B, la lame peut flamber mais les ajustements seront très peu précis puisque les forces sont modifiées par les plis. Étirer la lame de Gissinger et al. par les points A et B ne permet pas une déformation linéaire de la lame. De plus, les modes de fixation suggérés provoquent un encastrement total des extrémités. Ils sont susceptibles de provoquer dans la lame et en particulier dans les rayons de pliage des contraintes très élevées. Ils rendent également ladite lame très sensible aux contraintes indésirables telles que les déformations dues à la pose et les contraintes thermiques générées par les variations de température de la pièce à mesurer. Ces contraintes peuvent induire un signal largement supérieur à la grandeur à mesurer. Il est nécessaire de trouver une configuration de la lame qui permettra une répétitivité des flambages et de la construction de l'appareil.

Le brevet américain numéro 2,666,262 de Ruge décrit un appareil de mesure qui utilise deux lames planes déformables équipées de jauges de mesure et maintenues en flexion par flambage entre deux pièces porteuses liées rigidement entre elles par une pièce intermédiaire. Cette construction ne permet pas de régler la force de précontrainte des lames et donc de calibrer l'appareil de mesure pour assurer la reproductibilité des mesures d'un appareil à l'autre.

Le brevet américain numéro 3,780,817 de Videon décrit un appareil de mesure qui utilise une lame plane déformable équipée de jauges de mesure et montée entre deux pièces porteuses. Ces pièces porteuses comportent des fentes inclinées dans lesquelles s'encastrent les extrémités de la lame qui prend une position courbe. La lame n'est donc pas en appui isostatique sur ces pièces. De plus, l'entraxe des pièces porteuses n'est pas réglable, ce qui ne permet pas de modifier la force de précontrainte de la lame, ni de calibrer l'appareil de mesure.

## OBJECTIFS DE L'INVENTION

La prise en compte de ces contraintes conduit à tenter d'éliminer les inconvénients cités précédemment et à rendre aussi fidèle que possible la relation entre la pièce mécanique et le capteur.

La présente invention considère l'extensométrie comme le moyen de mesurer des forces. Elle décrit les procédés qui vont permettre d'implanter un capteur dans un dispositif à mesurer et d'obtenir la répétitivité.

## SOMMAIRE DE L'INVENTION

La répétitivité est celle de la relation de la déformation du capteur à laquelle celui ci est soumis avec celle du signal électrique qu'il délivre. Cette répétitivité impose que la loi de correspondance de la déformation de la pièce réceptrice à mesurer soit en correspondance avec la déformation de la lame interne au capteur et que le calage initial du capteur et le réglage de son échelle de conversion soient donc compatibles avant et après montage sur la pièce réceptrice.

Par exemple, la société MultiDyn commercialise un capteur équipé de deux pièces porteuses, d'une lame sur laquelle est monté un pont de jauges tel que décrit dans la littérature existante. Lors du montage du capteur avec les organes mécaniques, les déformations qui se produisent dans le capteur sont transmises aux pièces porteuses de la lame qui provoquent une extension ou une compression de la lame. Ceci se traduit dans le pont de jauges par une variation de résistance des composants qui constituent les branches du pont et par conséquent du signal électronique aux bornes du pont. La courbe d'étalonnage du capteur établie lors de la fabrication est donc faussée, ce qui oblige à réaliser in situ une nouvelle calibration qui ne garantit pas la fidélité de la correspondance entre la grandeur physique et le signal électrique et augmente les temps et les coûts du montage.

L'invention peut remplacer avantageusement tous ces types d'extensomètres et être utilisée comme capteur d'effort, de couple, et dans certains cas, comme capteur de déplacement.

Voici donc les principaux problèmes des capteurs existants que cette invention peut remplacer. Plusieurs de ces dispositifs d'extensométrie sont adaptés à certains types d'usage mais présentent tous des inconvénients. Les jauges résistives collées ou soudées directement sur la structure à mesurer sont des dispositifs très fiables et fidèles. Toutefois, leur implantation directe est un travail de laboratoire et n'est possible qu'en prenant des précautions très grandes avec un coût important, c'est pourquoi, pour les mesures courantes, on les fixe généralement sur un corps d'épreuve plus facile à implanter. Les moyens d'observation «extérieurs » à la structure, avec ou sans préparation de la surface, tels que la photoélasticimétrie, le moire, les vernis craquelants, l'holographie, la diffraction X, sont plutôt des techniques d'analyse des contraintes de laboratoire.

Les corps d'épreuve équipés de jauges remplaçant un élément de la structure, ou interposés aux points de transmission des efforts, sont très coûteux, difficiles à installer, et provoquent souvent un affaiblissement de la structure. Les corps d'épreuve fixés sur les structures présentent généralement une grande rigidité, les efforts aux butées sont très élevés et l'influence sur la structure peut être importante. Le glissement aux butées est difficile à éviter, provoquant des erreurs importantes de retour à zéro et d'hystérésis. Les extensomètres mécaniques ont une installation très délicate et ils sont fragiles et coûteux. Les capteurs piézo-électriques ne travaillent qu'en compression, exigent des pressions élevées et un montage compliqué. De plus, ils ne prennent en compte que les signaux dynamiques. Et finalement, les capteurs piézo-résistifs sont très fragiles (cellules de silicium) et dérivent énormément en température.

Le but de l'invention est d'apporter une solution au problème décrit ci-dessus en maintenant les pièces porteuses de la lame fixe entre le moment où on procède à l'étalonnage du capteur sur un banc de calibration et le montage sur l'organe mécanique.

L'invention consiste à régler l'offset et le gain en faisant varier mécaniquement les cotes entre les axes des pièces porteuses puis, une fois le réglage de la linéarité de la courbe obtenu, à régler l'offset pour une valeur du signal électrique correspondant à une cote connue et, ensuite, à bloquer les degrés de liberté par un dispositif mécanique permanent à l'aide d'une bride. La bride est constituée d'un film de matériau métallique, composite ou polymère, et elle est placée entre les pièces porteuses. Celle-ci conserve le réglage de l'étalonnage fait sur banc jusqu'au montage du capteur sur l'organe mécanique par des procédés industriels classiques connus de collage, soudure ou autre. Lorsque le capteur et l'organe mécanique sont associés, et donc strictement solidaires, on procède à la rupture de la bride et ceci assure un calage sans réglage au montage. La rupture de la bride permet de libérer le fonctionnement du capteur.

L'amélioration du dispositif par rapport à tous les autres dispositifs existants à ce jour est la facilité d'installation et les coûts réduits tout en conservant une excellente précision et fiabilité. De plus, il est robuste, mobile, réutilisable et peu sensible aux perturbations mécaniques.

Une autre réalisation de l'invention comprend un capteur d'extensométrie qui inclut deux butées capables d'être fixées solidairement sur un organe mécanique à être mesuré, une lame élastique en appui isostatique à ses extrémités entre les deux butées dont la lame élastique est maintenue en flexion par flambage, des moyens pour mesurer la déformation de la lame élastique résultant du déplacement des butées afin de déterminer la coupe dans l'organe mécanique.

## BRÈVE DESCRIPTION DES DESSINS

On décrira plus en détail ci-après, à titre indicatif et nullement limitatif, un dispositif conforme à la présente invention en référence aux dessins annexés sur lesquels :

La Figure 1 est une élévation d'une lame sur laquelle est implanté un pont de jauges;
La Figure 2 est une vue en perspective de la lame;
La Figure 3 est un schéma du circuit;
La Figure 4 est un tableau qui donne le signal électrique délivré par le capteur lorsqu'il est monté sur un banc de freinage;
La Figure 5 est une vue d'élévation de la lame avec le pont de jauges et la bride de blocage;
La Figure 6 est une élévation d'une lame en flambage retenue par des butées;
La Figure 6a est un schéma au plan de la lame utilisée au prototype;
La Figure 7 est un schéma des appuis de la lame;
La Figure 8 est une élévation du dispositif;
La Figure 9 est une coupe selon la ligne 9-9 de la Figure 8;
La Figure 10 est une vue de dessus du dispositif, partiellement coupée avec lame enlevée;
La Figure 11 est une vue d'un des côtés;

La Figure 12 est une coupe par le centre du dispositif avec les plaquettes cassables;

La Figure 13 est une élévation d'un des côtés avec les plaquettes;

La Figure 14 est un schéma de principe de la compensation thermique; et

La Figure 15 est une élévation du dispositif complété par un capteur à effet Hall.

## DESCRIPTION DÉTAILLÉE DE RÉALISATIONS PRÉFÉRÉES DE L'INVENTION

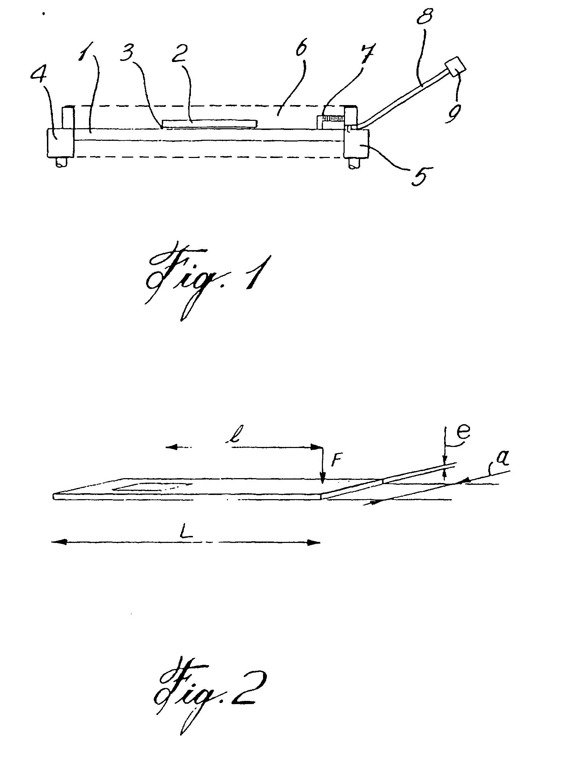

La description du capteur (Fig. 1) permet de comprendre plus aisément l'invention. Le capteur est composé d'une lame 1 sur laquelle est implanté un pont de jauges 2 à semi-conducteur résistif, piezo résistif, capacitif ou autre. La position du pont et un film de collage 3 permet de rendre solidaire les éléments 1 et 2. Les extrémités de la lame sont équipées de pièces porteuses 4 et 5. Une enveloppe déformable souple 6 assure la protection du pont de jauges et de l'électronique d'amplification 7 des signaux délivrés par le pont de jauges 2. La liaison entre le pont de jauges et l'électronique est réalisée par des conducteurs selon les règles de l'art.

L'électronique d'amplification est intégrée dans une des pièces porteuses 4 ou 5 et les informations sont délivrées à l'extérieur du capteur au moyen d'un conducteur 8 équipé d'un connecteur 9. Les points de raccordement sont au nombre de 3 ou 4. Les informations peuvent aussi, selon les applications, être délivrées par la mise en oeuvre de moyens de transmission, telles que des ondes radio, hyperfréquences, lorsque l'on ajoute au module d'amplification électronique 7 un module supplémentaire de transmission tel que fabriqué par la Société Motorola ou SGS Thomson.

Le fonctionnement du capteur est le suivant. La lame représente une lame conformément au dessin de la Fig. 2. Les déformations mesurées par chaque jauge sont de la forme $\in = 6F1/Eae.e$

Avec F : force appliquée

e: épaisseur de la lame

$\in$: déformation

l: distance force jauges

a: largeur de la lame

E: module de Young

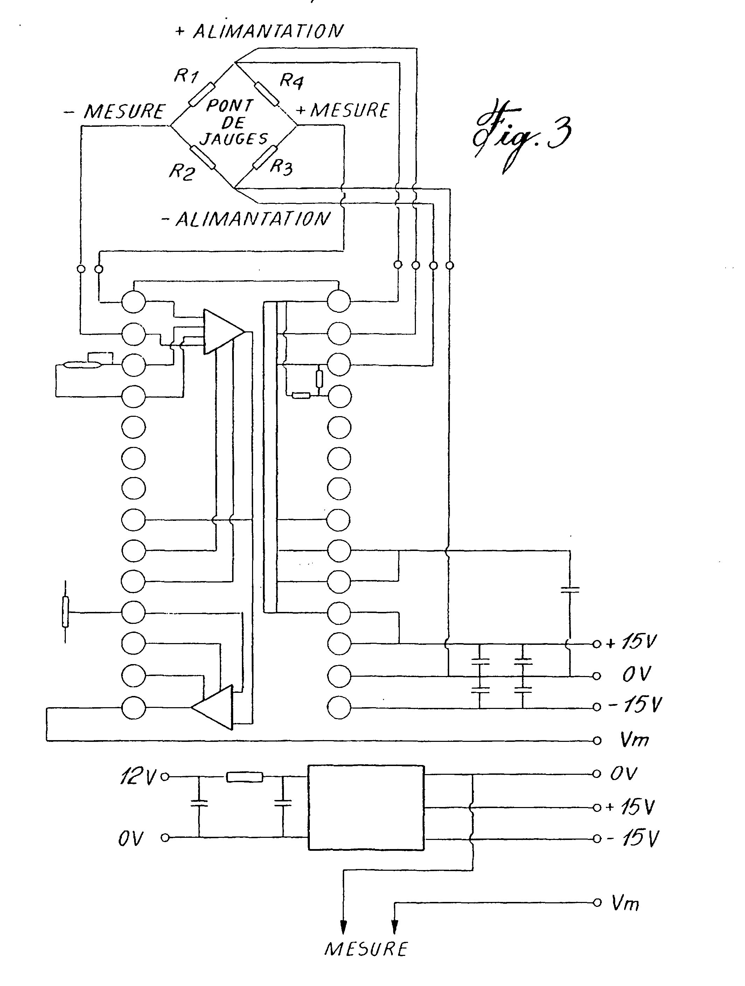

La déformation détermine une variation de la résistance des jauges selon le schéma de la Fig. 3. La tension mesurée aux bornes du pont suit la loi:

$$De = E/4 \ (DR1/R1-DR2/R2+DR3/R3-DR4/R4)$$

R1 et R3 les jauges travaillent en traction

R2 et R4 les jauges travaillent en compression

Il est possible de choisir que les jauges des branches adjacentes du pont travaillent en sens opposé et que les jauges des branches opposées travaillent dans le même sens, toutes les variations de résistances s'ajoutent. D'où

$$De = E/4 \ (\ DR1/R1+DR2/R2+DR3/R3+DR4/R4) = KE/4 \ D1/1$$

E est la tension d'excitation du pont

K le facteur de jauge

D1/1 la déformation totale des 4 jauges.

Les jauges sont des doubles jauges Wishay N2A 06 T006Q 350. On peut bien entendu utiliser toute jauge de dimensions et de type approprié sous réserve de respecter les dispositions et le branchement du pont permettant la combinaison correcte des signaux pour une lame en flexion suivant les techniques connues.

Le signal De est connecté au point 1 et 2 du circuit 1B31An qui est un composant analogique de la société Burr Brown monté en amplificateur du signal d'entrée. Le réglage du gain d'amplification est assuré par la résistance variable montée entre les points 3 et 4 du circuit et le réglage de l'offset par le réglage d'un pont diviseur résistant réglable alimenté entre deux tensions de référence positive et négative et dont le point milieu entre sur la borne 11. Le signal amplifié est délivré sur la borne 14 du circuit. Un circuit convertisseur continu de référence TUC12215 alimente le circuit amplificateur et le pont de jauges.

## DESCRIPTION DÉTAILLÉE DES FONCTIONS DE BASE DU PROCÉDÉ SELON L'INVENTION

La réalisation consiste à prendre un capteur et à exercer entre les pièces porteuses 4 et 5 une compression à l'aide d'un outil de serrage. La position de l'outil de serrage est contrôlée par un dispositif automatique de position piloté par un ordinateur de contrôle du processus de réglage. La lame se déforme en fonction de la contrainte de serrage ou de desserrage et le pont de jauges 2 émet pour chaque valeur de serrage un signal amplifié par le circuit électronique. Deux points de serrage permettent de simuler les forces de compression et de régler l'offset et la linéarité de la courbe par une action sur le réglage d'offset puis sur le gain du circuit électronique et d'obtenir ainsi les points A.B.C.D (Fig. 4). Une force de serrage minimale sera ensuite appliquée au capteur afin d'obtenir la valeur dite basse v1 de telle manière à obtenir la valeur du signal électrique correspondant au point A (Fig. 4). Lorsque la courbe désirée est obtenue, on réalise à la valeur dite basse la bride de blocage. Le capteur équipé de sa bride se trouve à la Fig. 5.

Ce calage est mis en oeuvre à l'aide d'une bride qui détermine une distance permanente entre les pièces porteuses. Le taux de compression ou d'extension de la lame est donc constant avant sa mise en place sur l'organe mécanique. La dimension de la bride est déterminée pendant le réglage du capteur sur banc à une longueur L1 qui correspond à une extension très petite, pratiquement toujours la même, de la lame permettant d'obtenir une valeur du signal électrique v1 toujours la même. Un procédé de collage par exemple permet d'assurer la fixation du capteur sur l'organe mécanique. Lorsque les deux éléments sont soudés l'un à l'autre ou qu'il n'existe plus de glissement possible entre l'organe mécanique et le capteur, la bride est alors coupée, permettant au capteur d'assurer sa fonction. La bride garantit la fidélité de la valeur du signal électrique v1 après la pose du capteur. Le but de la présente invention est de produire des capteurs d'extensométrie pouvant être facilement implantés sur des organes mécaniques de manière automatique et garantissant de pouvoir disposer du même signal électrique pour des organes mécaniques identiques. Ce procédé concerne de nombreuses applications et en particulier l'implantation de capteurs pour mesurer les forces de freinage dans un frein.

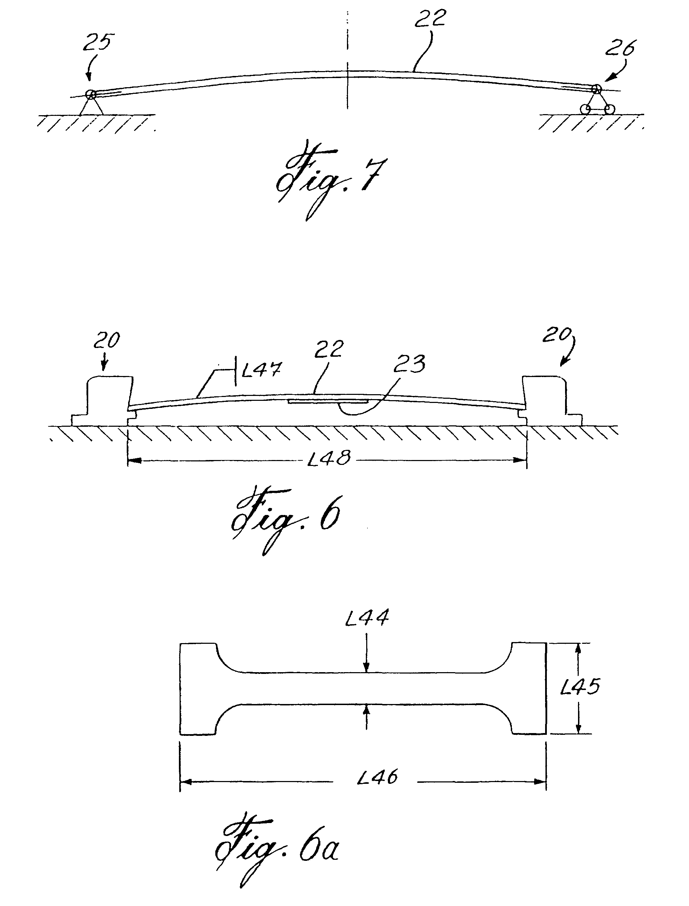

Le capteur illustré à la figure 6 représente un autre exemple qui permet de mieux comprendre l'invention. L'élément principal est constitué d'une lame mince 22 en matériau élastique, avec ou sans courbure initiale. La lame 22 est illustrée à la figure 6a. Le matériau peut, par exemple, être un alliage de titane (TA6U) ou aluminium (7075). Cette lame est coincée entre deux butées 20 suivant son axe longitudinal. Ces deux butées maintiennent la lame en flexion par flambage, de manière isostatique (il suffit pour cela que la longueur L48 entre les deux butées soit légèrement inférieure à la longueur L1 initiale de la lame, la différence L47-L48 étant supérieure à l'extension maximale de la surface).

Pour réaliser le maintien isostatique, les butées 20 doivent s'approcher le plus possible de la figure 7, une des articulations 25 bloquée en x et en y, libre en rotation, et l'autre 26 bloquée en y, libre en x, pour permettre de mesurer le déplacement à l'autre extrémité libre en déplacement. On peut réaliser les butées de trois manières. La première est d'usiner les butées directement dans la pièce comme sur la figure 6, la deuxième est de visser ou coller les butées sur la pièce comme à la figure 8 et la dernière est de relier les butées entre elles par un matériau d'élasticité basse pour ne pas entraîner d'efforts aux points de fixation.

L'extension ou la contraction de la longueur L0 entre les butées 20 provoque une flexion de la lame. Un pont de jauges 23 appliqué par une couche mince de colle 24, ou par un autre procédé, au milieu de la lame 22 de préférence, permet, tel que connu dans l'art antérieur, de mesurer les déformations subies par la lame 22. Ce pont de jauges 23 peut être à semi-conducteur résistif, piezo résistif, capacitif ou autre.

Le pont de jauges 23 (Fig. 8) est relié à une pièce porteuse 27 de l'électronique 28 située au-dessus de la lame 22 et séparée de celle-ci par un espace suffisant. La pièce porteuse 27 est appuyée sur les butées 20. L'électronique d'amplification 28 est ensuite reliée à un conducteur 29 par un connecteur 30 qui permet d'amener les informations à l'extérieur du dispositif. Un seul pont de jauges peut être utilisé, soit sur ou sous la lame 22. À un coût supérieur, on peut répartir les 4 jauges du pont 2 par 2 de chaque côté de la lame, et on obtient ainsi une sensibilité supérieure.

La caractéristique principale de ce dispositif est qu'il permet une installation simple car on peut prérégler le zéro initial avant la fixation sur la pièce. Il faut alors utiliser un montage comme illustré dans les figures 8 à 11. Nous ajoutons une bride ou un capot 31. Le capot 31 est de rigidité suffisante et comprend deux vis de blocage 21, deux faces inclinées extérieures 33 vis à vis les butées 20. Il y a un léger jeu 34 entre le dessous du capot 31 et le dessus des butées 20.

Avant l'installation du dispositif sur l'appareil où il doit prendre des mesures, le capot 31 permet de retenir toutes les parties du montage ensemble tout en protégeant la lame 22 et les butées 20. Les vis de blocage 21 permettent de fixer le zéro initial en liant le capot 31 aux butées 20. Une fois le dessous du dispositif collé à la surface où l'on désire prendre des mesures, on retire les vis de blocage 21. Le capot 31 est alors libre de glisser sur les faces inclinées 33 dans une gorge en V. À ce moment, le capot 31 sert uniquement de protection contre les intempéries et les manipulations accidentelles de la lame 22. Comme il est libre de se déplacer, un effort supplémentaire ne sera pas créé sur les butées 20 et le dispositif pourra effectivement mesurer les contraintes de la pièce à observer.

Le blocage du zéro est une des contraintes les plus difficiles à tenir. En effet, un relâchement de 1/100 mm, qui est un jeu très faible en mécanique et déjà très coûteux à obtenir représente la moitié ou les ¾ de l'étendue de mesure. L'ensemble des opérations d'étalonnage, blocage du zéro, installation du capteur, et suppression du blocage du zéro doit être réalisé avec un jeu inférieur à 1 micromètre. Le principe consiste à supprimer les mouvements de la butée d'appui de la lame provoqués par les efforts de mise en place et de serrage/desserrage. Les rotations suivant Oz et Ox sont supprimées par l'appui de la face supérieure de la butée sur la face inférieure du couvercle 31. Cet appui est assuré par les vis de blocage 21. Des tolérances de parallélisme et de planéité courantes, sans tolérance dimensionnelle, sont suffisantes pour assurer la précision. La rotation suivant Oy est bloquée par la présence des faces inclinées 33 sur le côté de la butée et l'intérieur des flancs du capot 31. On ne peut en effet pas compter sur un simple ajustement avec jeu, pour les raisons exposées plus haut. Ces faces arrivent en contact légèrement avant la face supérieure, ce qui empêche le mouvement de rotation. L'élasticité des flancs permet ensuite le contact avec la face supérieure. Pendant le fonctionnement, une fois les vis relâchées et/ou retirées, le capot est libre dans la gorge en V.

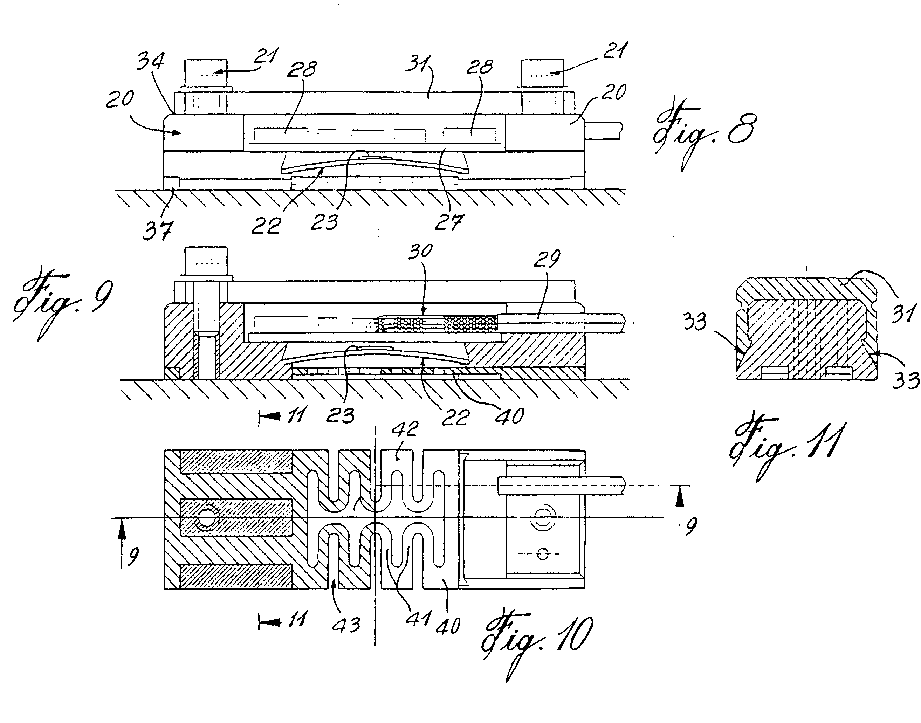

Comme tous les extensomètres, celui ci est soumis à sa propre dilatation et à la dilatation de la structure instrumentée en fonction de la température. Cette dilatation va provoquer un signal au niveau des jauges. Dans de nombreux cas, ce signal est indésirable et doit être éliminé pour ne conserver que le signal dû au phénomène à mesurer. Aucun extensomètre ne permet actuellement d'effectuer la compensation thermique automatique en jouant sur les caractéristiques de leur résistivité en fonction de la température. Dans notre dispositif, le maintien isostatique de la lame permet d'équilibrer facilement cette dilatation non souhaitée suivant le principe décrit sous la figure 14.
Soit :

L0 = longueur entre appuis
L1 = longueur libre de la lame
L2 = longueur de dilatation du substrat
L3 = longueur de dilatation libre du support de lame 3
L4 = longueur de dilatation libre du support de lame 4
$\alpha 1$ = coefficient de dilatation de la lame
$\alpha 2$ = coefficient de dilatation du substrat
$\alpha 3$ = coefficient de dilatation de la butée d'appui 3
$\alpha 4$ = coefficient de dilatation de la butée d'appui 4

Si $\Delta L0\ (\Delta T) = (\alpha 1 + 1)*L1*\Delta T$, les jauges disposées en pont complet équilibrent la dilatation naturelle de la lame et on n'enregistre aucun signal.

Comme $\Delta L0(T) = \alpha*\Delta T*L1$, il suffit d'avoir $\alpha 2*L2 - (\alpha 3*L3 + \alpha 4*L4) = \alpha 1*L1$ pour pouvoir équilibrer la différence de dilatation entre le capteur et la surface. La compensation résiduelle peut être réalisée par des résistances disposées en série ou en parallèle dans le pont de Wheatstone ou par un dispositif numérique.

Lorsqu'on veut augmenter la sensibilité du capteur par le raccourcissement de la lame, la force critique de flambage qui représente 99 % des efforts aux butées peut augmenter dans des proportions telles qu'elle nuise à la précision du dispositif et à celle du réglage du zéro. Une solution consiste à équilibrer les efforts de la lame qui tendent à repousser les butées par un ressort qui les retient. La résultante sur les points de fixation n'est ainsi plus que la différence des efforts. Un moyen très économique de réaliser ce ressort d'équilibrage est d'utiliser un cadre 40 en plastique surmoulé ou dans un autre matériau comme le titane ou l'aluminium par exemple, qui sert en même temps de pièce de jonction des butées et d'ossature du capteur (voir figure 10). Le cadre 40 est constitué de quatre portiques de montants 41 et de traverses supérieures 42. Les portiques 41 sont reliés par la partie centrale de leur traverse supérieure 42. Celle ci joue un rôle de ressort à lame. On peut moduler la raideur de ce ressort en faisant varier, outre les sections du portique, la longueur libre de la traverse en faisant varier la profondeur des encoches 43 et le module élastique du matériau (plastique armé ou non, métal, etc.)

Voici les étapes du fonctionnement du capteur monobloc tel qu'illustré aux figures 8 à 11. La première étape est le montage et le maintien de la lame. Au montage, le capteur subit un allongement proportionnel à l'effort de flambage de la lame 22 et à la rigidité du cadre 40. Les efforts de la lame et du cadre s'équilibrent pour un allongement donné et maintiennent la lame en position. Ensuite, il faut faire le préréglage du point de fonctionnement initial. Les butées 20 sont fixés sur une table d'étalonnage permettant de les déplacer l'un par rapport à l'autre avec une grande précision jusqu'à la valeur de précontrainte souhaitée pour la lame 22, les vis de blocage 21 étant déserrées. Il faut alors maintenir ce préréglage. Les vis 21 sont serrées à une valeur de couple prédéterminée. Les deux butées 20 sont ainsi immobilisés par rapport au capot 31 et la lame maintenue parfaitement à la valeur de zéro désirée.

Finalement, on installe le tout sur la pièce à instrumenter. Les deux butées sont collées, soudées ou vissés en permanence, tel que décrit précédemment, sur la surface à instrumenter. Une fois la fixation solidement établie, les vis 32 sont retirées et le capteur est prêt à fonctionner à partir de la valeur préréglée. La raideur du cadre 40 est suffisante pour maintenir la lame lors de l'assemblage, mais est calculée pour ne provoquer que de faibles efforts sur les points de fixation pendant le fonctionnement.

La façon préférée de l'inventeur pour réaliser son invention peut être légèrement modifiée pour changer les propriétés du capteur et permettre des mesures différentes. Par exemple, on peut modifier les paramètres de la lame de la façon suivante. Si on augmente l'épaisseur de la lame 22, on aura plus de sensibilité avec plus d'efforts. On utilisera une lame longue avec faible effort constant pour de grands déplacements ou une lame courte pour une grande sensibilité dans la mesure des petites déformations. Si on diminue la largeur de la lame, on diminue les efforts aux butées. Si on augmente l'entraxe pour une même lame, on augmente la sensibilité. On peut éliminer les problèmes d'équilibre instable dus au flambage en donnant une déformation plastique initiale à la lame.

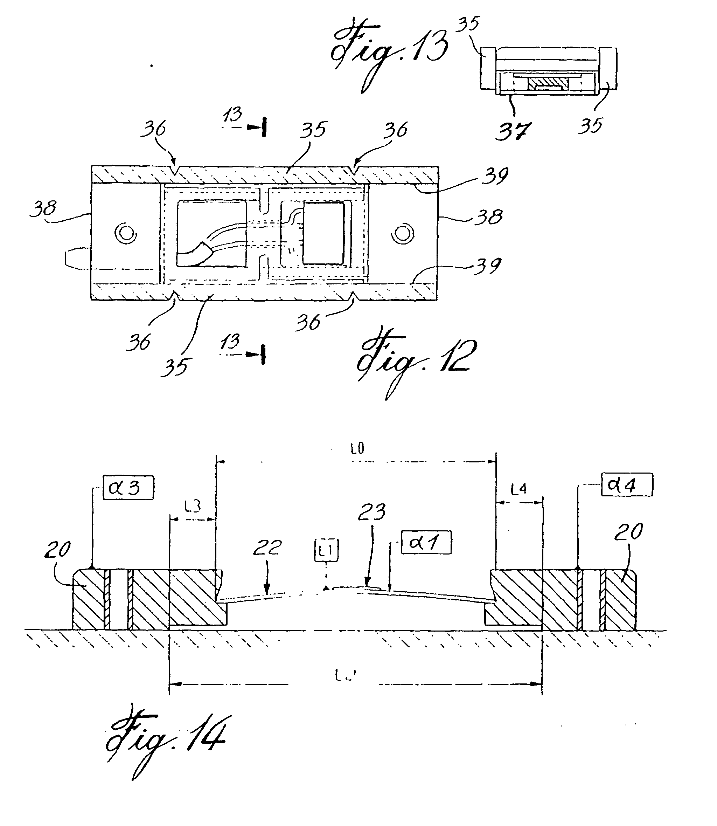

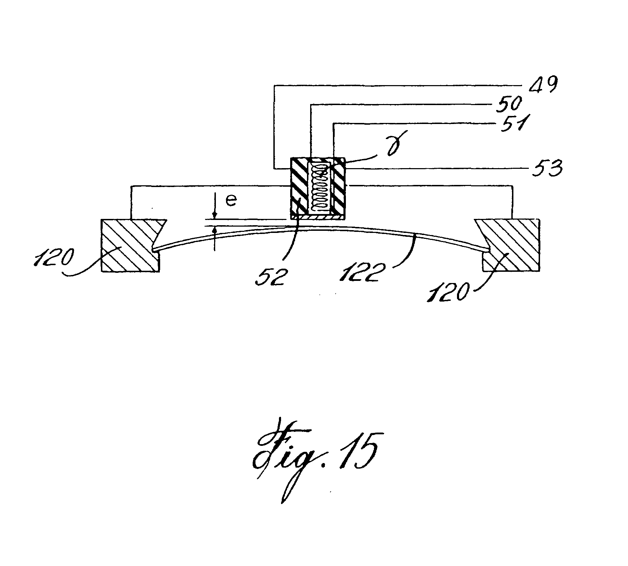

On peut aussi changer le pont de jauges 23 pour un dispositif différent, tel un capteur à effet Hall (comme à la figure 15) ou un capteur optique. Le capteur à effet Hall agit comme un électro-aimant plus ou moins excité lorsque la lame 22 se rapproche ou s'éloigne de sa bobine 52. Peu importe la façon choisie pour capter les déformations imposées à la lame, ce signal devra être transformé en impulsions électriques pour communiquer à l'extérieur du dispositif.

En modifiant légèrement le capot 31 de l'appareil, il est aussi possible de faire son étalonnage in situ. Une des butées 20 est en butée longitudinale par sa face extérieure sur le capot 31. La butée opposée est poussée par une vis (non-illustrée) jusqu'à obtenir la valeur de contrainte désirée sur la lame.

Pour bloquer le zéro, il est possible d'utiliser une barrette cassable. Les figures 12 et 13 montrent cette méthode. L'inventeur utilisera deux plaquettes 35 réalisées dans un matériau fragile et suffisamment rigide tel le verre ou la céramique. Éventuellement, une ou plusieurs entailles 36 sont créées pour faire un point de rupture. Finalement, le banc de réglage devra permettre un déplacement très précis tel que le capteur soit plaqué sur ses faces d'appui 37 et guidé par ses faces 38 parfaitement parallèles aux faces d'appui de la lame 22 dont l'une au moins se déplace pour réaliser la déformation de la lame. Le mode opératoire de ce principe est le suivant : Le capteur est fixé par ses faces 37 et guidé par ses faces 38, dont l'une sert de référence fixe et l'autre de référence mobile. La lame 22 est amenée à la position désirée par le déplacement de la face 38. On colle ensuite par les faces 39, les plaquettes 35 sur les butées 20. Une fois la colle prise, les plaquettes 35 maintiennent le capteur en position précontrainte et on peut le désolidariser du banc. On fixe ensuite le capteur sur la pièce à mesurer par ses faces 37. Lorsque la fixation est réalisée, on brise les plaquettes 35 avec des pinces ou par choc pour libérer le capteur et permettre son fonctionnement.

Cette méthode présente plusieurs avantages qui ont trait aux principes de base utilisés. Ce premier avantage est l'utilisation du flambage isostatique qui donne un faible effort aux butées. Les efforts aux butées sont considérablement diminués par le fait que, après flambage, la lame travaille en flexion et non plus en traction compression. Pour une lame de 25*5*0.3 mm et un déplacement de 0.02 mm, les efforts passent de 252 N à 33.7 N. De plus, dans le cas d'une lame en traction, il est impossible de fixer correctement une lame de cette dimension pour éviter le glissement des points de fixation (la sensibilité de mesure est de l'ordre de 0.03 micromètres), et on peut facilement créer des concentrations de contraintes amenant une déformation permanente de la lame. L'intérêt du dispositif est l'absence totale du moment sur les points de fixation et efforts plus faibles ce qui rend le dispositif apte au collage, car les colles résistent généralement bien au cisaillement et l'effort quasiment constant sur la plage des mesures, ce qui garantit les caractéristiques sur une plage de mesure importante.

Le flambage isostatique permet aussi un très bon retour à zéro et une faible hystérésis. Dans tout système de fixation, lorsque les efforts dépassent un certain seuil, il se produit un glissement. Au retour, les forces de rappel élastiques du système sont plus faibles que les efforts de frottement et le système prend une nouvelle position d'équilibre à zéro. Cet effet se produit à chaque cycle, d'où un glissement progressif du zéro ou une incertitude élevée si les efforts changent de sens. Dans notre cas, les efforts sont toujours orientés dans le même sens sur toute l'étendue de mesure et existent toujours, leur valeur étant faible et assez constante, ce qui garantit le plus faible glissement possible du zéro.

**Revendications**

1. Capteur d'extensométrie destiné à être monté sur un organe mécanique dans lequel se développent des forces à mesurer, ce capteur comprenant une lame (1,22,122) métallique plane déformable équipée de moyens de mesure (2,23,53) de la déformation linéaire de cette lame, ladite lame étant agencée pour être sensible aux déformations mécaniques d'extension et de compression subies et transmises par l'intermédiaire de deux pièces porteuses (4,5,20,120) en relation avec l'organe mécanique dans lequel se développent les forces, ces pièces porteuses étant réglables en position et indépendantes de ladite lame, ledit capteur comportant également une bride de blocage (31,35) mécanique temporaire et amovible agencée pour être montée sur ledit capteur de manière à bloquer ladite lame dans une position dite calibrée pendant le calibrage et le montage dudit capteur, et pour être retirée dudit capteur quand le capteur est monté sur l'organe mécanique et utilisé pour mesurer lesdites forces.

**2.** Capteur d'extensométrie selon la revendication 1, où les moyens de mesure (2,23,53) sont agencés pour émettre un signal de valeur électrique correspondant à la valeur de la force de précontrainte à laquelle est soumise la lame en position calibrée et déterminant la pose de la bride de blocage (31,35).

**3.** Capteur d'extensométrie selon la revendication 1, où la bride de blocage (31,35) est montée entre les pièces porteuses (4,5,20,120) de la lame (1,22,122) du capteur.

**4.** Capteur d'extensométrie selon la revendication 1, où la bride de blocage (31,35) est agencée pour être rompue après montage dudit capteur sur l'organe mécanique.

**5.** Capteur d'extensométrie selon la revendication 1, où la bride de blocage (31,35) est constituée d'un élément rigide agencé pour être coupé après montage du dit capteur sur l'organe mécanique.

**6.** Capteur d'extensométrie selon la revendication 1, où la bride de blocage (31) mécanique est en forme de capot rigide et les pièces porteuses (4,5,20,120) de la lame (1,22,122) du capteur sont agencées pour être fixées solidairement audit capot (31) après réglage du calibrage.

**7.** Capteur d'extensométrie selon la revendication 6, où le capot (31) comprend des moyens pour permettre aux pièces porteuses (4,5) en forme de butée (20,120) de glisser dans le capot (31) sur un axe longitudinal dans la direction de la lame (1,22,122).

**8.** Capteur d'extensométrie selon la revendication 1, où les pièces porteuses (4,5) sont des butées (20,120) et la lame (1,22,122) est élastique en appui isostatique à ses extrémités, sur les butées (20,120), maintenue en flexion par flambage.

**9.** Capteur d'extensométrie selon la revendication 8, où la lame (1,22,122) a subi une déformation permanente destinée à lui donner une courbure initiale.

**10.** Capteur d'extensométrie selon la revendication 8, où les butées (20,120) sont agencées pour être relâchées et assurer la liberté de fonctionnement dudit capteur après son montage sur l'organe mécanique.

**11.** Capteur d'extensométrie selon la revendication 10, où le capot (31) comprend au moins deux flancs parallèles ayant des faces inclinées (33) à l'intérieur du capot qui viennent en appui correspondant à chaque butée (20,120), et les faces intérieures des flancs ont des rainures longitudinales agencées pour permettre le mouvement des butées (20,120) sur l'axe longitudinal.

**12.** Capteur d'extensométrie selon la revendication 8, où les butées (20,120) sont reliées par un dispositif (40) formant un ressort antagoniste à la lame (1,22,122).

**13.** Capteur d'extensométrie selon la revendication 12, où le ressort est constitué par un membre plat (40) auquel on a donné de l'élasticité à l'aide d'encoches (43).

**14.** Capteur d'extensométrie selon la revendication 1, où la lame (1,22,122) plane est généralement rectangulaire et a une portion centrale et deux extrémités, la largeur de la partie centrale étant inférieure à la largeur des deux extrémités.

**15.** Capteur d'extensométrie selon la revendication 14, où la lame plane a la forme d'un "I".

**16.** Procédé pour calibrer un capteur d'extensométrie destiné à être monté sur un organe mécanique dans lequel se développent des forces à mesurer, ce procédé comprenant les étapes suivantes :

- on prévoit deux pièces porteuses (4,5,20,120) destinées à être fixées sur ledit organe mécanique,
- on met en place entre les deux pièces porteuses une lame (1,22,122) métallique plane déformable, équipée de moyens de mesure (2,23,53) de sa déformation linéaire, ladite lame étant agencée pour être sensible aux déformations mécaniques d'extension et de compression subies et transmises par l'intermédiaire de ces deux pièces porteuses,
- on règle l'entraxe des deux pièces porteuses (4,5,20,120) jusqu'à une position calibrée de la lame,
- on pose une bride de blocage (31,35) mécanique temporaire et amovible sur ce capteur pour bloquer ladite lame dans la position calibrée,

- on monte le capteur calibré avec sa bride de blocage sur l'organe mécanique à mesurer, et
- on retire la bride de blocage dudit capteur pour libérer la lame et permettre au capteur d'effectuer la mesure desdites forces.

**17.** Procédé selon la revendication 16, où la pose de la bride de blocage (31,35) est déterminée par un signal de valeur électrique émis par les moyens de mesure (2,23,53) et correspondant à la valeur de la force de précontrainte à laquelle est soumise ladite lame (1,22,122).

**18.** Procédé selon la revendication 16, où la pose de la bride de blocage (31,35) consiste à monter la bride de blocage entre les pièces porteuses (4,5) de la lame (1,22,122) du capteur.

**19.** Procédé selon la revendication 16, où le retrait de la bride de blocage (31, 35) consiste à rompre la bride.

**20.** Procédé selon la revendication 16, où les étapes de calibrage électronique, de réglage et de pose de la bride de blocage (31,35) sont réalisées sur un banc d'étalonnage.

**21.** Procédé selon la revendication 16, où le retrait de la bride de blocage (31,35) consiste à couper la bride.

**22.** Procédé selon la revendication 16, où les pièces porteuses (4, 5) forment des butées (20,120) et en ce que la mise en place de la lame (1,22,122) consiste à placer la lame en appui isostatique sur ses extrémités, sur les butées (20,120), et à la maintenir en flexion par flambage.

**23.** Procédé selon la revendication 22, avec une étape dans laquelle on déforme la lame (1,22,122) de manière permanente pour lui donner une courbure initiale.

**24.** Procédé selon la revendication 23, avec une étape dans laquelle on relâche les butées (20,120) pour assurer la liberté de fonctionnement dudit capteur après son montage sur l'organe mécanique.

**Patentansprüche**

**1.** Dehnungsmesssensor zur Montage auf einer mechanischen Einrichtung, auf der sich zu messende Kräfte entwickeln, wobei der Sensor einen metallischen ebenen, verformbaren Streifen (1,22,122) aufweist, der mit Einrichtungen (2,23,53) zum Messen der linearen Verformung des Streifens ausgestattet ist, wobei der Streifen so angeordnet ist, dass er für mechanische Dehnungs- und Kompressionsverformungen sensibel ist, die durch zwei mit der mechanischen Einrichtung, in der sich die Kräfte entwickeln, in Zusammenhang stehende Trägerelemente (4,5,20,120) durchlaufen und übertragen werden, wobei die Trägerelemente in ihrer Position regulierbar und unabhängig von dem Streifen sind, wobei der Sensor außerdem einen bewegbaren Flansch (31,35) zur vorübergehenden mechanischen Arretierung aufweist, der so angeordnet ist, dass er auf dem Sensor so montiert werden kann, dass er den Streifen in einer sogenannten geeichten Position während der Eichung und der Montage des Sensors arretiert, und von dem Sensor zurückgezogen wird, wenn der Sensor auf der mechanischen Einrichtung montiert ist, und zum Messen der Kräfte verwendet wird.

**2.** Dehnungsmesssensor nach Anspruch 1, in dem die Messeinrichtungen (2,23,53) so angeordnet sind, dass sie ein Signal mit einem elektrischen Wert ausgeben, der dem Wert der mechanischen Vorspannungskraft entspricht, welcher der Streifen in der geeichten Position ausgesetzt ist und der den Einbau des Arretierungsflansches (31,35) bestimmt.

**3.** Dehnungsmesssensor nach Anspruch 1, in dem der Arretierungsflansch (31,35) zwischen den Träger-elementen (4,5,20,120) des Streifens (1,22,122) des Sensors montiert ist.

**4.** Dehnungsmesssensor nach Anspruch 1, in dem das Trägerelement (31,35) so angeordnet ist, dass es nach der Montage des Sensors auf der mechanischen Einrichtung zerbrochen werden kann.

**5.** Dehnungsmesssensor nach Anspruch 1, in dem der Arretierungsflansch (31,35) aus einem starren Element besteht, welches so angeordnet ist, dass es nach der Montage des Sensors auf der mechanischen Einrichtung zerschnitten wird.

6. Dehnungsmesssensor nach Anspruch 1, in dem der Flansch (31) zur mechanischen Arretierung die Form einer starren Haube aufweist und die Trägerelemente (4,5,20,120) des Streifens (1,22,122) des Sensors so angeordnet sind, dass sie nach der Regulierung der Eichung kraftschlüssig mit der Haube (31) verbunden sind.

7. Dehnungsmesssensor nach Anspruch 6, in dem die Haube (31) Einrichtungen aufweist, um den die Form eines Anschlages (20,120) aufweisenden Trägerelementen (4,5) das Gleiten in der Haube (31) auf einer Längsachse in Richtung des Streifens (1,22,122) zu ermöglichen.

8. Dehnungsmesssensor nach Anspruch 1, in dem die Trägerelemente (4,5) Anschläge (20,120) sind und der Streifen (1,22,122) elastisch ist und sich an seinen äußersten Enden in isostatischer Auflage auf den Anschlägen (20,120) befindet und durch Knicken in gebogenem Zustand gehalten wird.

9. Dehnungsmesssensor nach Anspruch 8, in dem der Streifen (1,22,122) eine dauerhafte Verformung durchlaufen hat, wodurch er eine anfängliche Krümmung erhalten soll.

10. Dehnungsmesssensor nach Anspruch 8, in dem die Anschläge (20,120) so angeordnet sind, dass sie entspannt werden können und die Funktionsfreiheit des Sensors nach seiner Montage auf der mechanischen Einrichtung sicherstellen.

11. Dehnungsmesssensor nach Anspruch 10, in dem die Haube (31) mindestens zwei parallele Flanken mit geneigten Flächen (33) im Inneren der Haube aufweist, die dementsprechend auf jedem Anschlag (20,120) aufliegen, wobei die Innenflächen der Flanken Längsschlitze aufweisen, die so angeordnet sind, dass sie die Bewegung der Anschläge (20,120) auf der Längsachse ermöglichen.

12. Dehnungsmesssensor nach Anspruch 8, in dem die Anschläge (20,120) mittels einer Vorrichtung (40) miteinander verbunden sind, die eine Gegenfeder zu dem Streifen (1,22,122) ausbilden.

13. Dehnungsmesssensor nach Anspruch 12, in dem die Feder aus einem flachen Bauteil (40) besteht, dem mithilfe von Kerben (43) Elastizität verliehen wurde.

14. Dehnungsmesssensor nach Anspruch 1, in dem der ebene Streifen (1,22,122) im Allgemeinen rechteckig ist, wobei die Breite eines zentralen Abschnittes geringer als die Breite der zwei äußersten Enden ist.

15. Dehnungsmesssensor nach Anspruch 14, in dem der ebene Streifen die Form eines "I" aufweist.

16. Verfahren zur Eichung eines Dehnungsmesssensors zur Montage auf einer mechanischen Einrichtung, auf der sich zu messende Kräfte entwickeln, wobei das Verfahren die folgenden Schritte umfasst:

   - Es sind zwei Trägerelemente (4,5,20,120) vorgesehen, die zur Befestigung auf der mechanischen Einrichtung bestimmt sind,
   - zwischen den beiden Trägerelementen wird ein metallischer, ebener, verformbarer Streifen (1,22,122) positioniert, der mit Einrichtungen (2,23,53) zum Messen seiner linearen Verformung ausgestattet ist, wobei der Streifen so angeordnet ist, dass er für durchlaufene und durch die zwei Trägerelemente übertragene mechanische Dehnungs- und Kompressionsverformungen sensibel ist,
   - der Achsabstand der zwei Trägerelemente (4, 5,20,120) wird bis zu einer geeichten Position des Streifens reguliert,
   - es wird ein bewegbarer Flansch (31,35) zur vorübergehenden mechanischen Arretierung auf dem Sensor positioniert, der so angeordnet ist, dass er den Streifen in der geeichten Position arretiert,
   - der geeichte Sensor wird mit seinem Arretierungsflansch auf der mechanischen Messeinrichtung montiert, und
   - der Arretierungsflansch wird von dem geeichten Sensor zurückgezogen, um den Streifen freizugeben und dem Sensor die Durchführung der Messung der Kräfte zu ermöglichen.

17. Verfahren nach Anspruch 16, in dem der Einbau des Trägerelementes (31,35) durch ein von den Messeinrichtungen (2,23,53) ausgegebenes Signal mit einem elektrischen Wert bestimmt wird, der dem Wert der mechanischen Vorspannungskraft entspricht, welcher der Streifen (1,22,122) ausgesetzt ist.

18. Verfahren nach Anspruch 16, in dem der Einbau des Arretierungsflansches (31,35) in der Montage des Arretierungsflansches zwischen den Trägerelementen (4,5) des Streifens (1,22,122) des Sensors besteht.

**19.** Verfahren nach Anspruch 16, in dem das Zurückziehen des Arretierungsflansches (31,35) im Zerbrechen des Flansches besteht.

**20.** Verfahren nach Anspruch 16, in dem die Schritte der elektronischen Eichung, der Regulierung und des Einbaus des Arretierungsflansches (31,35) auf einem Eichstand durchgeführt werden.

**21.** Verfahren nach Anspruch 16, in dem das Zurückziehen des Arretierungsflansches (31,35) im Zerschneiden des Flansches besteht..

**22.** Verfahren nach Anspruch 16, in dem die Trägerelemente (4,5) Anschläge (20,120) ausbilden, wobei die Positionierung des Streifens (1,22,122) in einer Positionierung des Streifens in isostatischer Auflage auf seinen äußersten Enden auf den Anschlägen (20,120) und im Aufrechterhalten derselben durch Knicken in gebogenem Zustand besteht.

**23.** Verfahren nach Anspruch 22, mit einem Schritt, bei dem der Streifen (1,22,122) dauerhaft verformt wird, um eine anfängliche Krümmung zu erhalten.

**24.** Verfahren nach Anspruch 23, mit einem Schritt, bei dem die Anschläge (20,120) entspannt werden, um die Funktionsfreiheit des Sensors nach seiner Montage auf der mechanischen Einrichtung sicherzustellen.

**Claims**

**1.** Strain measurement sensor adapted to be mounted on a mechanical member in which forces to be measured are developed, this sensor comprising a bendable flat metal blade (1,22,122) provided with meansw (2,23,53) for measuring the linear deformation of this blade, said blade being designed to be sensitive to mechanical expansion and compression deformations sustained and transmitted via two bearing parts (4,5,20,120) in relation to the mechanical member in which the forces are developed, these bearing parts being adjustable in position and independent of said blade, said sensor also including a temporary and removable mechanical locking flange (31, 35) adapted to be mounted on said sensor in a manner to block said blade in a so-called calibrated position when calibrating and mounting said sensor, and to be removed from said sensor when the sensor is mounted on the mechanical member and is used to measure said forces.

**2.** Strain measurement sensor according to claim 1, **characterized in that** the measuring means (2,23,53) are adapted to emit an electrical value signal corresponding to the value of the pre-constrained force to which the blade is submitted in calibrated position and determining the mounting of the blocking flange (31,35).

**3.** Strain measurement sensor according to claim 1, **characterized in that** the blocking flange (31,35) is mounted between the bearing parts (4,5,20,120) of the blade (1,22,122) of the sensor.

**4.** Strain measurement sensor according to claim 1, **characterized in that** the blocking flange (31,35) is adapted to be cut after mounting said sensor on the mechanical member.

**5.** Strain measurement sensor according to claim 1, **characterized in that** the blocking flange (31,35) consists of a rigid element adapted to be cut after mounting said captor on the mechanical member.

**6.** Strain measurement sensor according to claim 1, **characterized in that** the mechanical blocking flange (31) is in the shape of a rigid hood and the bearing parts (4,5,20,120) of the blade (1,22,122) of the sensor are adapted to be unitarily fixed to said hood (31) after adjustment of the gauging.

**7.** Strain measurement sensor according to claim 6, **characterized in that** the hood (31) comprises means for allowing the bearing parts (4,5) in the form of abutment (20,120) to slide in the hood (31) along a longitudinal axis in the direction of the blade (1,22,122).

**8.** Strain measurement sensor according to claim 1, **characterized in that** the bearing parts (4,5) are abutments (20,120) and the blade (1,22,122) is elastic in isostatic support at its ends, on the abutments (20,120), and is maintained in flexion by buckling.

9. Strain measurement sensor according to claim 8, **characterized in that** the blade (1,22,122) was subjected to permanent deformation to give it an initial curvature.

10. Strain measurement sensor according to claim 8, **characterized in that** the abutments (20,120) are adapted to be released to assure the freedom of operation of said sensor after mounting same on the mechanical member.

11. Strain measurement sensor according to claim 10, **characterized in that** the hood (31) comprises at least two parallel flanks with inclined faces (33) inside the hood which give support corresponding to each abutment (20,120), and the interior faces of the flanks have longitudinal grooves adapted to allow movement of the abutments (20,120) on a longitudinal axis.

12. Strain measurement sensor according to claim 8, **characterized in that** the abutments (20,120) are bound to a device (40) forming a spring that is antagonistic to the blade (1,22,122).

13. Strain measurement sensor according to claim 12, **characterized in that** the spring is made from a flat member (40) to which one has added elasticity using notches (43).

14. Strain measurement sensor according to claim 1, **characterized in that** the flat blade (1,22,122) is generally rectangular and has a central portion and two ends, the width of the central portion is less than the width of the two ends.

15. Strain measurement sensor according to claim 14, **characterized in that** the flat blade is I-shaped.

16. Process for calibrating a strain measurement sensor adapted to be mounted on a mechanical member in which forces to be measured are developed, this process comprising the following steps:

   there are provided two bearing parts (4,5,20,120) adapted to be fixed on said mechanical member, the two bearing parts are mounted between a deformable flat metal blade (1,22,122), provided with means (2,23,53) for measuring its linear deformation, said blade being arranged to be sensitive to expansion and compression mechanical deformations undergone and transmitted via these two bearing parts, the distance between the axles of the two bearing parts (4,5, 20, 120) is adjusted until a calibrated position of the blade is reached, a tempory and removable mechanical blocking flange (31,35) is mounted on this sensor to block said blade in calibrated position, the calibrated sensor and its blocking flange are mounted on the mechanical member to be measured, and the blocking flange is removed from said sensor to free the blade and allow the sensor to carry out measuring of said forces.

17. Process according to claim 16, **characterized in that** the mounting of the blocking flange (31,35) is determined by an electrical value signal emitted par the measuring means (2,23,53) and corresponding to the value of the pre-constrained force to which said blade (1,22,122) is submitted.

18. Process according to claim 16, **characterized in that** the installation of the blocking blade (31,35) consists in mounting the blocking flange between the bearing parts (4,5) of the blade (1,22,122) of the sensor.

19. Process according to claim 16, **characterized in that** the removal of the blocking blade (31,35) consists in breaking the flange.

20. Process according to claim 16, **characterized in that** the steps of electronic calibrating, adjustment and installation of the blocking flange (31,35) are carried out on a gauging bench.

21. Process according to claim 16, **characterized in that** the removal of the blocking blade (31,35) consists in cutting the flange.

22. Process according to claim 16, **characterized in that** the bearing parts (4,5) define abutments (20,120) and **in that** the setting up of the blade (1,22,122) consists in placing the blade in isostatic support on its ends, on the abutments (20,120), and to keep it in flexion by buckling.

**23.** Process according to claim 22, **characterized in that** it comprises a step in which the blade (1,22,122) is permanently deformed to give it an initial curvature.

**24.** Process according to claim 23, **characterized in that** it includes a step in which the abutments (20,120) are released to allow for a free functioning of said sensor after its installation on the mechanical member.

*Fig. 1*

*Fig. 2*

+ ALIMANTATION

R1   R4
PONT
- MESURE   DE   + MESURE
JAUGES

R2   R3

- ALIMANTATION

Fig. 3

+ 15V
0V
- 15V
Vm

12V   0V
+ 15V
0V   - 15V

Vm

MESURE

EP 1 056 985 B1

CAPTEUR (V)

5

4.5

4

3.5

3

2.5

2

1.5

1

40    60    80    100   120   140   160   180   200   220   240

BANC (m.da N)

A    B    C    D

*Fig. 4*

1  3  2  7  8  9
4  5  10

*Fig. 5*

*Fig. 7*

*Fig. 6*

*Fig. 6a*

Fig. 8

Fig. 9

Fig. 10

Fig. 11

*Fig.13*

*Fig.12*

*Fig.14*

*Fig.15*